# EUROPÄISCHE PATENTSCHRIFT

(11) **EP 3 224 592 B1**
(45) Veröffentlichungstag und Bekanntmachung des Hinweises auf die Patenterteilung: **25.08.2021**
(21) Anmeldenummer: 15801753.3
(22) Anmeldetag: 24.11.2015
(51) Int. Cl.: G01N 1/22

(54) **EINSATZ FÜR EINE EIN- UND AUSLAUFVORRICHTUNG**
WATER VAPOUR MEASURING DEVICE AND PROBE
DISPOSITIF DE MESURE DE VAPEUR D'EAU ET SONDE

(30) Priorität: 24.11.2014 EP 14194585
(43) Veröffentlichungstag der Anmeldung: 04.10.2017
(73) Patentinhaber: Bundesrepublik Deutschland, vertreten durch das BMVI, dieses vertreten durch den Deutschen Wetterdienst, 63067 Offenbach (DE)
(72) Erfinder: HOFF, Axel, 30659 Hannover (DE)
(74) Vertreter: Eisenführ Speiser
(86) Internationale Anmeldenummer: PCT/EP2015/077573
(87) Internationale Veröffentlichungsnummer: WO 2016/083422

(56) Entgegenhaltungen:
- EP-A1- 1 457 765
- DE-A1- 4 100 363
- US-B1- 6 857 328
- HERMANN M ET AL: "Sampling characteristics of an aircraft-borne aerosol inlet system", JOURNAL OF ATMOSPHERIC AND OCEANIC TECHNOLOGY, Bd. 18, Januar 2001 (2001-01), Seiten 7-19, XP008114321, ISSN: 0739-0572
- C. A. M. Brenninkmeijer ET AL: "CARIBIC-Civil Aircraft for Global Measurement of Trace Gases and Aerosols in the Tropopause Region", JOURNAL OF ATMOSPHERIC AND OCEANIC TECHNOLOGY, Bd. 16 Oktober 1999 (1999-10), Seiten 1373-1383, XP055177635, Gefunden im Internet: URL:http://journals.ametsoc.org/
- None

## Beschreibung

Die Erfindung betrifft einen Einsatz für eine Ein- und Auslaufvorrichtung, eine Ein- und Auslaufvorrichtung für Luft zur Messluftversorgung eines Systems zum Bestimmen des Wasserdampfgehaltes oder anderer gasförmiger Beimengungen der Umgebungsluft eines fliegenden Flugzeuges, sowie eine Wasserdampfmesseinrichtung.

In der folgenden Beschreibung dieser Erfindung wird vornehmlich auf das Gas "Wasserdampf' Bezug genommen. Der Einsatz ist zum Einsetzen in eine jeweilige Ein- und Auslaufvorrichtung vorgesehen. Ein- und Auslaufvorrichtungen können beispielsweise für die Anwendung bei Feuchtemessungen eingesetzt werden. Wasserdampfmesseinrichtungen für Flugzeuge sind grundsätzlich bekannt und besitzen typischerweise eine Ein- und Auslaufvorrichtung (Messsonde), die dazu dient, Luft aus der Umgebung eines Luftfahrzeugs aufzunehmen und wieder an diese abzugeben. Die von der Ein- und Auslaufvorrichtung aufgenommene Luft wird über eine Zuleitung dem eigentlichen Messsystem zugeführt, in dem dann die Bestimmung des Wasserdampfgehaltes der Luft erfolgt. Das Messsystem, auf das hier Bezug genommen wird, weist eine Messkammer auf und ist innerhalb des Luftfahrzeugs untergebracht. Im Betrieb des Luftfahrzeuges strömt permanent Luft durch die Ein- und Auslaufvorrichtung und über die Zuleitung in und durch das Messsystem mit der Messkammer und anschließend über die Ableitung wieder zurück zu der Ein- und Auslaufvorrichtung und wird dort wieder an die Umgebung des Luftfahrzeuges abgegeben. Die durch das Messsystem strömende Luft wird auch als Messluft bezeichnet.

Aus Hermann et al.: "Sampling characteristics of an aircraft-borne aerosol inlet system", JOURNAL OF ATMOSPHERIC AND OCEANIC TECHNOLOGY, Bd. 18, Januar 2001 (2001 -01), Seiten 7-19, XP008114321, ISSN: 0739-0572 ist ein an einem Flugzeug montiertes Aerosoleinlasssystem bekannt. Das Aerosoleinlasssystem wird verwendet, um Eigenschaften der Luft aus der Umgebung eines Luftfahrzeugs zu messen.

Aus C.A.M. Brenninkmeijer et al.: "CARIBIC-Civil Aircraft for Global Measurement of Trace Gases and Aerosols in the Tropopause Region", Journal of Atmospheric and Oceanic Technology, Bd. 16 Oktober 1999 (1999-10), Seiten 1373-1383, XP055177635 ist eine Messeinrichtung mit einem Messsystem für die Konzentration von Ozon, Kohlenstoffmonoxid, Aerosole und anderer Gase bekannt. Die Messeinrichtung hat ein Einlaufsystem. Das Einlaufsystem hat einen beheizten Einlaufkegel in dem sich Enden von zwei Einlaufleitungen befinden, die ins Innere eines Flugzeugs führen. Ein Schaft des Einlaufsystems hat eine Länge von 25 cm, so dass sich die Enden der Einlaufleitungen außerhalb der Grenzschicht des Flugzeugs befinden. Das Einlaufsystem führt Luft in einen mit Messinstrumenten gefüllten Container im Inneren des Flugzeugs, um diese zu analysieren.

Aus EP 1 457 765 A1 ist eine TAT (TAT = Total Air Temperature) Sensorsonde bekannt, die den Luftstrom aufnimmt, der ein Flugzeug während des Fluges umgibt. Die TAT Sensorsonde enthält eine Leitung die den Luftstrom in eine Primärkammer mit einem TAT Sensor und in eine Sekundärkammer zum Messen weiterer Eigenschaften führt.

Ziel der Erfindung ist es einen verbesserten Einsatz für eine Ein- und Auslaufvorrichtung für Luft zur Messluftversorgung einer Wasserdampfmessseinrichtung bereitzustellen.

Erfindungsgemäß wird dieses Ziel von einem Einsatz für eine flugzeugmontierbare Ein- und Auslaufvorrichtung mit einer Stauhülse, einer Einlaufleitung und wenigstens einer Austrittsöffnung erreicht. Die Stauhülse hat eine Eintrittsöffnung. Die Einlaufleitung hat einen Zuleitungsanschluss für eine jeweilige Zuleitung, beispielsweise zu einer Wasserdampfmesseinrichtung. Die Stauhülse bildet einen ersten Zuleitungsabschnitt einer solchen Zuleitung. Die Stauhülse ist zum Einsetzen in einen hohlen Schaft der jeweiligen Ein- und Auslaufvorrichtung ausgebildet und so bemessen, dass sich die Eintrittsöffnung der Stauhülse nahe einer Öffnung zwischen einem jeweiligen Kopfteil und dem jeweiligen Schaft der jeweiligen Ein- und Auslaufvorrichtung befindet, wenn der Einsatz in den Schaft eingesetzt ist. Des Weiteren ist die Stauhülse über die Einlaufleitung als zweitem Zuleitungsabschnitt mit dem Zuleitungsanschluss für eine jeweilige Zuleitung verbunden. Weiterhin ist die Stauhülse so ausgebildet, dass sie ein Druckgefälle zwischen der Eintrittsöffnung der Stauhülse und der wenigstens einen Austrittsöffnung des Einsatzes erzeugt, wenn der Einsatz in den Schaft eingesetzt ist. Das Druckgefälle sorgt dafür, dass Luft vom Kopfteil der Ein- und Auslaufvorrichtung durch den Einsatz zu einer an diese angeschlossenen Messvorrichtung hindurch strömt und von der Messvorrichtung zurück zur Austrittsöffnung des Einsatzes. Die als zweiter Zuleitungsabschnitt dienende Einlaufleitung des Einsatzes weist einen verringerten Durchmesser gegenüber der als erstem Zuleitungsabschnitt dienenden Stauhülse auf, wodurch in dem in den jeweiligen Schaft eingesetzten Zustand des Einsatzes das Druckgefälle zwischen der Eintrittsöffnung der Stauhülse und der wenigstens einen Austrittsöffnung des Einsatzes erzeugt wird. Der Einsatz weist einen Ableitungsanschluss für eine jeweilige Ableitung auf. Der Einsatz weist ferner ein die Einlaufleitung umgebendes Auslaufmantelrohr auf, das mit dem Ableitungsanschluss für die jeweilige Ableitung verbunden ist. Das Auslaufmantelrohr weist die wenigstens eine Austrittsöffnung auf. Der erste Zuleitungsabschnitt weist einen größeren Querschnitt auf als die Summe der Querschnitte des zweiten Zuleitungsabschnitts und des den zweiten Zuleitungsabschnitt umgebenden Auslaufmantelrohrs.

Der Einsatz, insbesondere die Stauhülse, ist also derart ausgestaltet, dass er in einen jeweiligen Schaft einer jeweiligen flugzeugmontierbaren Ein- und Auslaufvorrichtung eingesetzt und verwendet werden kann. Die jeweilige Ein- und Auslaufvorrichtung hat einen Lufteinlauf, ein hohles Kopfteil, einen hohlen Schaft und einen Befestigungsabschnitt. Der Lufteinlauf der jeweiligen Ein- und Auslaufvorrichtung ist mit der Einlaufleitung des Einsatzes verbindbar, die den Zuleitungsanschluss für die jeweilige Zuleitung aufweist. Die jeweilige Zuleitung ist bevorzugt eine Leitung zu einer jeweiligen Messkammer eines jeweiligen Messsystems, das sich im Betrieb im Inneren eines jeweiligen Flugzeuges befindet.

Der Schaft der jeweiligen Ein- und Auslaufvorrichtung erstreckt sich zwischen dem Befestigungsabschnitt und dem Kopfteil und umschließt die Einlaufleitung des Einsatzes. Der Befestigungsabschnitt der jeweiligen Ein- und Auslaufvorrichtung ist für die Befestigung der jeweiligen Ein- und Auslaufvorrichtung an einem jeweiligen Flugzeug ausgebildet. Bevorzugt hat der Lufteinlauf der jeweiligen Ein- und Auslaufvorrichtung einen solchen Abstand von dem Befestigungsabschnitt, dass der Lufteinlauf sich außerhalb einer Reibungsschicht (Grenzschicht) um eine Oberfläche des jeweiligen Flugzeuges befindet, wenn die jeweilige Ein- und Auslaufvorrichtung an dem jeweiligen fliegenden Flugzeug montiert ist. Die Länge und Form des Einsatzes ist also durch die Randbedingungen, die durch die Ein- und Auslaufvorrichtung vorgegeben werden definiert. Besonders bevorzugt ist der Einsatz für die Verwendung in einer Ein- und Auslaufvorrichtung mit einer Gehäusevariante des Typs Rosemount© 102 BX (oder-BW) vorgesehen. Der Einsatz kann bevorzugt auch in ähnlich dimensionierten Ein- und Auslaufvorrichtungen verwendet werden.

Ferner wird eine nicht beanspruchte flugzeugmontierbare Ein- und Auslaufvorrichtung mit einem Lufteinlauf und einem Luftauslass sowie einem nicht beanspruchten Befestigungsabschnitt für die Befestigung der Ein- und Auslaufvorrichtung an einem Flugzeug offenbart. Der Lufteinlauf hat einen solchen Abstand von dem Befestigungsabschnitt, dass der Lufteinlauf sich außerhalb einer Reibungsschicht (Grenzschicht) um eine Oberfläche eines Flugzeuges befindet, wenn die Ein- und Auslaufvorrichtung an einem fliegenden Flugzeug montiert ist. Der Lufteinlauf ist des Weiteren mit einer Einlaufleitung verbunden, die einen Zuleitungsanschluss für eine Zuleitung aufweist, um in den Lufteinlauf eintretende Luft zu einer Messkammer eines Messsystems zu führen, das sich im Betrieb im Inneren eines Flugzeuges befindet. Weiterhin ist der Luftauslass mit einem Ableitungsanschluss für eine Ableitung verbunden, um aus der Messkammer austretende Luft zum Luftauslass der Ein- und Auslaufvorrichtung zu führen.

Insbesondere betrifft die Erfindung also auch eine flugzeugmontierbare Ein- und Auslaufvorrichtung mit einem in die Ein- und Auslaufvorrichtung eingesetzten Einsatz. Die flugzeugmontierbare Ein- und Auslaufvorrichtung umfasst einen Lufteinlauf, ein Kopfteil, einen Schaft und einen Befestigungsabschnitt. Der Lufteinlauf ist mit der Einlaufleitung des Einsatzes verbunden, die den Zuleitungsanschluss für die Zuleitung aufweist. Der Schaft erstreckt sich zwischen dem Befestigungsabschnitt und dem Kopfteil und umschließt die Einlaufleitung des Einsatzes. Der Befestigungsabschnitt ist für die Befestigung der Ein- und Auslaufvorrichtung an einem Flugzeug ausgebildet. Bevorzugt hat der Lufteinlauf einen solchen Abstand von dem Befestigungsabschnitt, dass der Lufteinlauf sich außerhalb einer Reibungsschicht (Grenzschicht) um eine Oberfläche eines Flugzeuges befindet, wenn die Ein- und Auslaufvorrichtung an einem fliegenden Flugzeug montiert ist.

In einer bevorzugten Ausgestaltung der flugzeugmontierbaren Ein- und Auslaufvorrichtung mit einem in die Ein- und Auslaufvorrichtung eingesetzten Einsatz weist das Kopfteil an einer Stirnseite den Lufteinlauf auf. Des Weiteren schließt das Kopfteil einen beidseitig offenen Strömungskanal ein, dessen vorderes, offenes Ende der Lufteinlauf ist und der im Betrieb von Luft durchströmt wird und so angeordnet ist, dass er im Betrieb annähernd parallel zur anliegenden Strömung verläuft. Das hintere offene Ende des Strömungskanals hat einen kleineren Querschnitt als der Lufteinlauf. Weiterhin weist die Ein- und Auslaufvorrichtung eine Sondenheizung auf. Die Sondenheizung ist an einer Stirnfläche der Ein- und Auslaufvorrichtung oder zwischen Lufteinlauf und Einlaufleitung angeordnet. Die Sondenheizung kann beispielsweise am Übergang oder nahe dem Übergang zwischen Lufteinlauf und Stauhülse angeordnet sein. Die Ein- und Auslaufvorrichtung kann auch mehrere Sondenheizungen aufweisen, die in diesem Fall bevorzugt an einer Stirnfläche der Ein- und Auslaufvorrichtung und zwischen Lufteinlauf und Einlaufleitung, beispielsweise am Übergang oder nahe dem Übergang zwischen Lufteinlauf und Stauhülse angeordnet sind.

Die Erfindung betrifft weiterhin eine Wasserdampfmesseinrichtung mit einer flugzeugmontierbaren Ein- und Auslaufvorrichtung mit einem in die Ein- und Auslaufvorrichtung eingesetzten erfindungsgemäßen Einsatz, sowie einer Zuleitung, einem Messsystem mit einer Messkammer und einer Ableitung. Die Zuleitung ist mit dem Zuleitungsanschluss des Einsatzes bzw. der Ein- und Auslaufvorrichtung und einem Eingang der Messkammer dicht verbindbar. Die Ableitung ist mit einem Ausgang der Messkammer und einem Ableitungsanschluss des Einsatzes bzw. der Ein- und Auslaufvorrichtung verbindbar. Das Messsystem ist ausgebildet den Wasserdampfgehalt von Luft in der Messkammer zu bestimmen.

Die Erfinder haben erkannt, dass es vorteilhaft ist, wenn sich während des Flugbetriebs eines Flugzeuges eine Druckdifferenz zwischen Eintrittsöffnung der Stauhülse und Austrittsöffnung des Einsatzes aufbaut, die den Durchfluss von Luft, insbesondere Messluft bewirkt. Die Eintrittsöffnung der Stauhülse ist mit dem Lufteinlauf verbunden und die Austrittsöffnung des Einsatzes ist mit dem Luftauslass verbunden. Somit baut sich also während des Flugbetriebs eines Flugzeuges eine Druckdifferenz zwischen Lufteinlass und Luftauslass auf, die den Durchfluss von Luft bewirkt. Aufgrund des Druckgefälles ist eine Pumpe zum Ansaugen und/oder Pumpen der Luft nicht notwendig. Ein weiterer Aspekt, den die Erfinder erkannt haben, ist, dass an einem entgegen der Anströmung ausgerichteten Messlufteinlauf ein Staueffekt auftritt, der eine adiabatische Erwärmung der Messluft bewirkt. Somit ermöglicht der adiabatische Staueffekt sowie eine in einer bevorzugten Ausgestaltung an der Ein- und Auslaufvorrichtung angeordnete Sondenheizung eine Erhöhung der Temperatur der Messluft, sodass die Temperatur der Messluft nicht nahe dem jeweiligen Taupunkt liegt. Hierdurch kann die Gefahr verringert werden, dass es zu einer Kondensatbildung kommt, die eine Wasserdampfmessung, also die Bestimmung des Wasserdampfgehaltes der Messluft, beeinträchtigen würde. Dies folgt daraus, dass die Temperatur der Messluft erhöht ist und damit auch die Taupunktdifferenz der Messluft. Eine Beheizung der Messkammer kann damit entfallen. Weiterhin kann durch einen Abstand der Eintrittsöffnung zur Flugzeugoberfläche der Kontakt mit an der Flugzeugaußenhaut angelagerten Partikeln verringert werden. Des Weiteren kann eine Vermischung der in das Messsystem eintretenden Messluft mit gegebenenfalls aus der Druckkabine austretender Luft verhindert werden. Weiterhin ermöglicht es die Ein- und Auslaufvorrichtung die Dichte des zu messenden Wasserdampfes zu erhöhen, wodurch eine Erniedrigung der unteren Ansprechschwelle des Messsystems erfolgen kann. Die Ein- und Auslaufvorrichtung kann verhindern, dass sich unterkühlte Wasserpartikel an dem der Flugzeugströmung ausgesetzten Stirnfläche der Eintrittsöffnung der Ein- und Auslaufvorrichtung anlagern und so die Flugsicherheit gefährden. Inhomogenitäten in der Messgasdichte können vermieden werden, weil die Messkammer im Messsystem gegebenenfalls nicht mehr wegen einer sonst möglichen Kondensationsgefahr beheizt werden muss.

Die Ein- und Auslaufvorrichtung soll vorzugsweise innerhalb von 3 m bis 5 m hinter der Rumpfnase des Luftfahrzeugs, also mit der Eintrittsöffnung außerhalb der turbulenten Reibungsschicht (Grenzschicht) angeordnet sein, die sich um das Luftfahrzeug befindet. Die Reibungsschicht um das Luftfahrzeug ist die fluiddynamische Grenzschicht der das Flugzeug umströmenden Luft, in Folge der Reibung an einer Flugzeugoberfläche eine geringere Geschwindigkeit aufweist, als weiter entfernte Luft. Innerhalb der Reibungsschicht findet ein Impuls-, Wärme- und Molekular- beziehungsweise Partikelaustausch mit der Wandfläche des Luftfahrzeuges statt. Da der Lufteinlauf der Ein- und Auslaufvorrichtung und daher auch die Eintrittsöffnung der Stauhülse des Einsatzes in dem in den Schaft der Ein- und Auslaufvorrichtung eingesetzten Zustand des Einsatzes außerhalb der Reibungsschicht angeordnet ist, unterliegt die in die Ein- und Auslaufvorrichtung eintretende Messluft keiner Beeinflussung durch Eigenschaften der Wandfläche, wie beispielsweise einer Wasserbenetzung oder eines Druckkabinenlecks stromaufwärts.

In Folge des erfindungsgemäß vorgesehenen Abstands des Lufteinlaufs von der Außenoberfläche des Luftfahrzeugs trifft die Luft im Betrieb des Luftfahrzeugs in etwa mit der Relativgeschwindigkeit auf den Lufteinlauf, die der Geschwindigkeit des Luftfahrzeugs relativ zur Luft, also der Air-Speed, entspricht. Im Betrieb wird die auf den Lufteinlauf treffende Umgebungsluft relativ zum Luftfahrzeug abgebremst und dadurch verdichtet, sodass sie sich bedingt durch den Staueffekt adiabatisch erwärmt. Die Erwärmung hängt dabei von dem am Lufteinlauf herrschenden Auftreffdruck ab, der wiederum geschwindigkeitsabhängig ist. Im Ergebnis ist die Messluft wärmer als die Umgebungsluft, sodass die Gefahr von Kondensatbildung verringert ist. Dadurch kann auf eine weitere Erwärmung der Messluft weitgehend und insbesondere in der Messkammer verzichtet werden.

Die als zweiter Zuleitungsabschnitt dienende Einlaufleitung des Einsatzes weist einen verringerten Durchmesser gegenüber der als erstem Zuleitungsabschnitt dienenden Stauhülse auf, wodurch in dem in den jeweiligen Schaft eingesetzten Zustand des Einsatzes das Druckgefälle zwischen der Eintrittsöffnung der Stauhülse und der wenigstens einen Austrittsöffnung des Einsatzes erzeugt wird. In dem in den jeweiligen Schaft eingesetzten Zustand des Einsatzes bildet sich zwischen der Außenwand des Einsatzes und der Innenwand des Schafts ein innerer Hohlraum aus. Luft strömt unter anderem außen an dem ersten Zuleitungsabschnitt mit vergrößertem Durchmesser vorbei und wird dort aufgrund einer Verengung infolge eines relativ geringen Abstandes zwischen der Außenwand des ersten Zuleitungsabschnittes und der Innenwand des Schafts beschleunigt, sodass sich an der Austrittsöffnung des Einsatzes ein niedrigerer statischer Druck ergibt, als an der Eintrittsöffnung der Stauhülse.

Der Einsatz ist bevorzugt ausgebildet, die jeweilige Ein- und Auslaufvorrichtung über die jeweilige Zuleitung und eine jeweilige Ableitung mit einer jeweiligen Messkammer eines jeweiligen Messsystems, das sich im Betrieb im Inneren eines jeweiligen Flugzeuges befindet, zu verbinden, wenn der Einsatz in den jeweiligen Schaft eingesetzt ist. Vorzugsweise dient das Messsystem zur Wasserdampfmessung. Besonders bevorzugt ist die wenigstens eine Austrittsöffnung mit der jeweiligen Ableitung verbindbar und zum Abführen eines Fluids, beispielsweise Luft und insbesondere Messluft aus dem Einsatz ausgebildet, wenn der Einsatz in den jeweiligen Schaft eingesetzt ist. Vorzugsweise ist der Einsatz derart mit der jeweiligen Ableitung verbindbar, dass der Einsatz aus der jeweiligen Messkammer austretende Luft zu einem jeweiligen Luftauslass der jeweiligen flugzeugmontierbaren Ein- und Auslaufvorrichtung führen kann.

In einer weiteren bevorzugten Ausgestaltung kann der Einsatz alternativ oder zusätzlich derart ausgebildet sein, dass er in die jeweilige flugzeugmontierbare Ein- und Auslaufvorrichtung eingesetzt und wieder entfernt werden kann. Bevorzugt weist der Einsatz dafür Mittel zum lösbaren Verbinden des Einsatzes mit dem jeweiligen Schaft der jeweiligen Ein- und Auslaufvorrichtung auf. Mittel können insbesondere Halteelemente, Klemmelemente, Befestigungselemente, Verankerungselemente oder dergleichen wie beispielsweise Schrauben, Haken, Klammern, Halter, Nieten, Schrauben, Bolzen oder dergleichen sein. Bevorzugt dienen als Mittel zum lösbaren Verbinden des Einsatzes mit dem jeweiligen Schaft der jeweiligen Ein- und Auslaufvorrichtung Überwurfmuttern.

Der Einsatz weist einen Ableitungsanschluss für eine jeweilige Ableitung auf. Der Einsatz weist ferner ein die Einlaufleitung umgebendes Auslaufmantelrohr auf, das mit dem Ableitungsanschluss für die jeweilige Ableitung verbunden ist. Das Auslaufmantelrohr weist die wenigstens eine Austrittsöffnung auf. Die wenigstens eine Austrittsöffnung kann am oder nahe dem Übergang zwischen dem ersten Zuleitungsabschnitt und dem zweiten Zuleitungsabschnitt angeordnet sein. Des Weiteren ist die wenigstens eine Austrittsöffnung bevorzugt dazu ausgebildet ein Fluid aus dem Auslaufmantelrohr abzuführen. Der erste Zuleitungsabschnitt weist einen größeren Querschnitt auf als die Summe der Querschnitte des zweiten Zuleitungsabschnitts und des den zweiten Zuleitungsabschnitt umgebenden Auslaufmantelrohrs.

Die wenigstens eine Austrittsöffnung kann beispielsweise ein Austrittsschlitz sein, der zum Abführen eines Fluids aus dem Einsatz ausgebildet ist.

In einer bevorzugten Ausgestaltung weist der Einsatz eine Stellschraube auf, die dazu ausgebildet ist eine justierbare Engstelle zu bewirken über die eine Menge Luft ab dem Eintritt und damit der Druck im Luftführungssystem einstellbar ist. Bevorzugt ist die Stellschraube innerhalb der Einlaufleitung angeordnet. Besonders bevorzugt ist die Stellschraube am Übergang oder nahe des Übergangs zwischen der Einlaufleitung und dem Zuleitungsanschluss angeordnet. Mit Hilfe der Stellschraube lässt sich also die Menge an Luft regeln, die über die Eintrittsöffnung der Stauhülse in die Einlaufleitung eintritt.

In einer besonders bevorzugten Ausgestaltung des erfindungsgemäßen Einsatzes weist die als zweiter Zuleitungsabschnitt dienende Einlaufleitung einen verringerten Durchmesser gegenüber der als erstem Zuleitungsabschnitt dienenden Stauhülse auf, wodurch in dem in den jeweiligen Schaft eingesetzten Zustand des Einsatzes das Druckgefälle zwischen der Eintrittsöffnung der Stauhülse und der wenigstens einen Austrittsöffnung des Einsatzes erzeugt wird. Des Weiteren ist der Einsatz ausgebildet, die jeweilige Ein- und Auslaufvorrichtung über die jeweilige Zuleitung und eine jeweilige Ableitung mit einer jeweiligen Messkammer eines jeweiligen Messsystems, das sich im Betrieb im Inneren eines jeweiligen Flugzeuges befindet, zu verbinden, wenn der Einsatz in den jeweiligen Schaft eingesetzt ist. Weiterhin ist der Einsatz derart mit der jeweiligen Ableitung verbindbar, dass der Einsatz aus der jeweiligen Messkammer austretende Luft zu einem jeweiligen Luftauslass der jeweiligen flugzeugmontierbaren Ein- und Auslaufvorrichtung führen kann. Ferner weist der Einsatz einen Ableitungsanschluss für die jeweilige Ableitung auf und der Einsatz weist ein die Einlaufleitung umgebendes Auslaufmantelrohr auf, das mit dem Ableitungsanschluss für die jeweilige Ableitung verbunden ist. Des Weiteren weist das Auslaufmantelrohr die wenigstens eine Austrittsöffnung auf und die wenigstens eine Austrittsöffnung ist am oder nahe dem Übergang zwischen dem ersten Zuleitungsabschnitt und dem zweiten Zuleitungsabschnitt angeordnet und ausgebildet ein Fluid aus dem Auslaufmantelrohr abzuführen. Weiterhin weist der erste Zuleitungsabschnitt einen größeren Querschnitt auf als die Summe der Querschnitte des zweiten Zuleitungsabschnitts und des den zweiten Zuleitungsabschnitt umgebenden Auslaufmantelrohrs.

Die Kombination der vorgenannten Merkmale ermöglicht es verschiedene Vorteile zu realisieren. Insbesondere ermöglicht diese besonders bevorzugte Ausgestaltung eine Verwendung des Einsatzes in einer Ein- und Auslaufvorrichtung ohne zusätzliche Pumpen, da die Luft über einen Lufteinlauf in die Eintrittsöffnung des Einsatzs eingesogen und an der Austrittsöffnung herausgesogen wird, um dann durch den Luftaulass der jeweiligen Ein- und Auslaufvorrichtung herausgeführt zu werden. Der Einsatz versorgt daher in seinem in die jeweilige Ein- und Auslaufvorrichtung eingesetzten Zustand ein Messsystem, insbesondere für eine Wasserdampfmessung, kontinuierlich mit Luft. Der Einsatz ermöglicht es eine für die Messung erforderliche Fließgeschwindigkeit der Luft, beispielsweise zwischen 3 und 5 Litern pro Minute, ohne zusätzlichen Verwendung von Pumpen zu erreichen. Ferner kann die Luft mit einer solchen Temperatur in der jeweiligen Messkammer des jeweiligen Messsystems bereitgestellt werden, dass eine Erwärmung der Messkammer nicht notwendig ist. Eine Erwärmung der Messkammer könnte eine inhomogene Temperaturverteilung bei der Messung bewirken und so den Messfehler erhöhen.

Die erfindungsgemäße Ein- und Auslaufvorrichtung wird im Folgenden auch als
Ram Air Intake for Water Vapour Measurement (RAIWaM)
bezeichnet. Der Einfachheit halber wird im Folgenden das Akronym RAIWaM verwendet.

Der äußere Ummantelungsteil von RAIWaM kann ein für Luftfahrzeuge gewöhnliches Gesamttemperaturmessgehäuse sein, das im Folgenden auch als TAT-Gehäuse bezeichnet wird (TAT = Total Air Temperature), wie es bisher für Lufttemperaturmessungen verwendet wird. Konventionelle Gehäuse dieser Art für die Lufttemperaturmessung besitzen jedoch keine Zuleitung und Ableitung und mithin auch keine Zuleitungs- und Ableitungsanschlüsse zum Anschluss an ein Messsystem für die Bestimmung des Wasserdampfgehaltes der Luft. Das aerodynamische und thermodynamische Funktionsprinzip der TAT-Gehäuse ist in Stickney et al. (1994) dargelegt; c.f. STICKNEY, T. M.; SHEDLOV, M. W., THOMPSON, D. I., 1994: Goodrich Total Temperature Sensors. Goodrich Corporation, Burnsville, Maine, USA. Eine mögliche Gehäusevariante ist die des Typs Rosemount© 102 BX (oder-BW), die ein entnehmbares Temperaturmesselement enthält.

Die staubedingte adiabatische Erwärmung der Messluft beträgt bei Mach 0,85 und in einer Höhe von 200 hPa ca. 30 K. Selbst bei kleineren Geschwindigkeiten und in geringeren Höhen sorgt die adiabatische Erwärmung dafür, dass die Lufttemperatur zu dem möglichen Taupunkt immer einen ausreichenden Abstand behält. Die einzige Ausnahme ist beim Durchfliegen von Wolken gegeben, was bei dem nachträglichen Umrechnen des Wasserdampfmischungsverhältnisses in die relative Feuchte zu einem Wert von über 100 % führen kann. Letztlich kann dieser Wert immer als Hinweis auf das Vorhandensein von flüssigen oder festen Wasserpartikeln, sprich Wolken oder Niederschlag, verwendet werden.

In einer möglichen Ausgestaltung der flugzeugmontierbaren Ein- und Auslaufvorrichtung beträgt der Abstand zwischen Befestigungsabschnitt und Lufteinlauf zwischen 50 mm und 150 mm, insbesondere zwischen 80 mm und 100 mm. Die flugzeugmontierbare Ein- und Auslaufvorrichtung kann beispielsweise einen Abstand zwischen Befestigungsabschnitt und Lufteinlauf von 87 mm haben.

In einer bevorzugten Ausgestaltung der flugzeugmontierbaren Ein- und Auslaufvorrichtung weist die Ein- und Auslaufvorrichtung ein Kopfteil, einen Schaft und einen Flansch auf. Der Schaft erstreckt sich zwischen Flansch und Kopfteil und umschließt die Einlaufleitung. Das Kopfteil weist an einer Stirnseite den Lufteinlauf auf. Der Flansch bildet den Befestigungsabschnitt zum Befestigen der Ein- und Auslaufvorrichtung an einem Flugzeug. Weiterhin kann das Kopfteil einen beidseitig offenen Strömungskanal einschließen, dessen vorderes, offenes Ende der Lufteinlauf ist und der im Betrieb von Luft durchströmt wird und so angeordnet ist, dass er im Betrieb annähernd parallel zur anliegenden Strömung verläuft. Des Weiteren kann sich der Strömungskanal stromabwärts des Lufteinlaufes zunächst im Innenquerschnitt erweitern und anschließend zu seinem offenen hinteren, einen Luftauslauf bildenden Ende wieder verjüngen. Die Zuleitung kann von einem im Innenquerschnitt erweiterten Abschnitt des Strömungskanals abgehen. Zudem kann das hintere offene Ende des Strömungskanals einen kleineren Querschnitt haben, als der Lufteinlauf. Der kleinere Querschnitt am hinteren offenen Ende des Strömungskanals erzeugt eine Strömungsengstelle, die im Flugzustand des Luftfahrzeuges die am Eintritt in die relativ geschwindigkeitsreduzierte Strecke entstehende Druckerhöhung und somit die adiabatische Erwärmung der Messluft erzeugt. Die Summe aus Auftreffdruck und statischem Druck, also der Gesamtdruck und damit auch der adiabatische Erwärmungseffekt bleiben entlang des Strömungskanals bzw. in der kompletten Messstrecke bis zu der Strömungsengstelle erhalten.

In einer Ausgestaltung weist die flugzeugmontierbare Ein- und Auslaufvorrichtung eine Sondenheizung auf. Die Sondenheizung ist bevorzugt an einer Stirnfläche der Ein- und Auslaufvorrichtung und/oder am Übergang oder nahe dem Übergang zwischen Lufteinlauf und Einlaufleitung angeordnet.

Die flugzeugmontierbare Ein- und Auslaufvorrichtung weist vorzugsweise eine beheizte Eintrittsöffnung auf. Die hierzu vorzugsweise vorgesehene Sondenheizung dient zur Vermeidung von Eisbildung und ist vorzugsweise an der Stirnfläche der Ein- und Auslaufvorrichtung angeordnet.

Weiterhin kann die flugzeugmontierbare Ein- und Auslaufvorrichtung zusätzlich oder alternativ eine an der Zuleitung zur Messkammer angeordnete Heizung aufweisen. Die an der Zuleitung angeordnete Heizung dient zur Erwärmung der Messluft, bevor sie in den eigentlichen Messprozess der Messkammer eintritt und macht somit einer Erwärmung der Messluft in der Messkammer überflüssig. Es ist möglich, dass die durch den Staueffekt bedingte adiabatische Erwärmung der Messluft als noch nicht ausreichend angesehen wird, eine Kondensatbildung sicher zu vermeiden. In diesem Fall kann die Heizung zur Erwärmung der Einlaufleitung zwischen RAIWaM und dem Messsystem dienen, um so die Messluft zu erwärmen. Entsprechend kann es gemäß einer bevorzugten Ausführungsvariante vorgesehen sein, dass die Zuleitung zur Messkammer eine Heizung zum Erwärmen von durch die Zuleitung strömende Luft aufweist. Indem die Heizung im Bereich der Zuleitung angeordnet ist, ist es möglich die Messluft vor dem Eintreten in die Messkammer ausreichend zu erwärmen, sodass die Messluft innerhalb der Messkammer nicht beheizt werden muss und deswegen eine homogene Temperatur aufweist.

Die Messkammer des Messsystems ist vorzugsweise eine Absorptionsmesskammer, die eine Bestimmung des Wasserdampfgehalts zum Beispiel mittels Absorptionsspektrometrie erlaubt.

In einem beispielhaften Anwendungsfall des RAIWaM für das Messsystem Typ WVSS-II von SpectraSensors Inc., USA hat dieses eine Messkammer für die Bestimmung des Wasserdampfgehalts mittels Absorptionsspektrometrie. Die Absorptionsspektrometrie ist ein Verfahren zum Bestimmen des Wasserdampfgehaltes der Luft. Eine Messluftsäule wird von einem Messlichtstrahl durchleuchtet dessen Absorption bei einer bestimmten Wellenlänge das Maß der Wasserdampfdichte wiedergibt. Für die Berechnung eines physikalisch konservativen Luftfeuchteparameters, wie z.B. dem Wasserdampfmassenmischungsverhältnis ist neben der Wasserdampfdichte auch die Messung des Druckes und der Temperatur des Kammerinhaltes erforderlich. Letztere Größe kann nur an einer endlichen Zahl von Messpunkten innerhalb der Kammer erfolgen. Aus diesem Grund ist ein homogenes Temperaturfeld erforderlich, um einen repräsentativen Temperaturwert zu erhalten. Eine direkte Kammerbeheizung würde mit diesem Ziel in Konflikt stehen. Der adiabatische Erwärmungseffekt des RAIWaM ist für das Erreichen des beschriebenen Ziels ein wesentlicher Schritt.

Die mit der Ein- und Auslaufvorrichtung und ihren möglichen Ausgestaltungen erreichten bzw. erreichbaren Gewinne sind:
- die geräteinterne Kondensation kann vermieden oder zumindest verringert werden, ohne gesonderte Beheizung des Kernteils des Messsystems, also im Fall eines optischen Verfahrens der Absorptions- oder Streuungsmesskammer
- da der Lufteintritt von RAIWaM bei aerodynamisch korrekter Positionierung auf dem Flugzeugrumpf außerhalb der Reibungsschicht liegt,
   > können im Anströmbereich vorhandene Kabinenlecks keine Störungen erzeugen,
   > können im Anströmbereich Wasser- oder Eisanlagerungen an der Außenhaut des Flugzeuges ohne Einfluss (keine Memory-Effekte) bleiben,
- wegen des Staueffektes kann eine gegenüber der Außenluft deutlich erhöhte Wasserdampfdichte (um bis zu 50 %) im Endeffekt für eine Erniedrigung der unteren Ansprechschwelle des Messverfahrens sorgen.

Um die spezifizierten Eigenschaften (Lufteintrittspunkt außerhalb der Grenzschicht des Flugkörpers) zu haben, sollte der Lufteinlauf des RAIWaM in dem gleichen Abstand zur Flugzeugnase bzw. Rumpfnase untergebracht werden, der auch für die Temperatursensoren des Flugzeuges einzuhalten ist.

Die Erfindung betrifft des Weiteren eine Wasserdampfmesseinrichtung mit einer Ein- und Auslaufvorrichtung sowie einer Zuleitung, einem Messsystem mit einer Messkammer und einer Ableitung. Die Zuleitung ist mit dem Zuleitungsanschluss der Ein- und Auslaufvorrichtung und einem Eingang der Messkammer dicht verbunden. Die Ableitung ist mit einem Ausgang der Messkammer und dem Ableitungsanschluss der Ein- und Auslaufvorrichtung verbunden. Das Messsystem ist ausgebildet den Wasserdampfgehalt von Luft in der Messkammer zu bestimmen.

In einer bevorzugten Ausgestaltung der Wasserdampfmesseinrichtung ist die Messkammer eine Absorptionsmesskammer, die eine Bestimmung der Luftfeuchtigkeit mittels eines Absorptionsspektrogramms erlaubt.

Die Erfindung schließt die Erkenntnis ein, dass bekannte Wasserdampfmesseinrichtungen folgende Nachteile haben:
- Die in den Lufteinlauf einströmende Luft ist zuvor mit der stromaufwärts gelegenen Rumpfoberfläche in Kontakt. Abhängig von deren Wasser- oder Eisbenetzung und von der Temperatur können nicht reproduzierbare Trägheits-Effekte entstehen (auch Memory-Effekt genannt).
- Die Messluft kann wegen verschiedentlich auftretender kleiner Lecks im stromaufwärts gelegenen Teil der Druckkabine durch die wasserdampfangereicherte Innenluft der Kabine kontaminiert sein. Die Lecks können im Lauf der Alterung des Flugzeuges an Türen, Fenstern, Klappen, Steckverbindern, Fahrwerksschacht und allen Übergängen von Bauteilen des Rumpfes entstehen, beispielsweise durch Ermüdungserscheinungen an den Stoßnähten der Aluminium-bleche. Diese Lecks sind für den Flugbetrieb bedeutungslos, aber für die Wasserdampfmessung fatal. Der Effekt nimmt mit der Höhe zu, also mit zunehmender Druckdifferenz zwischen Kabine und Umgebung. Der Effekt ist vornehmlich flugzeugtypen- und - altersabhängig. Es können aber auch individuelle Unterschiede typengleicher Flugzeuge auftreten. Eine Kalibrierbarkeit dieser immer möglichen Fehlereffekte ist prinzipiell nicht gegeben.
- Der früheren Ein- und Auslaufvorrichtung, dem sogenannten "Air Sampler" (Teil des Systems WVSS-II von SpectraSensors Inc., USA) zugrundeliegendes Konstruktionsziel, nämlich der Erhalt des Flugzeugumgebungsdruckes (statischer Druck), hat sich als Nachteil erwiesen. Bei einer relativen Feuchte der Umgebungsluft von nahe 100% kann im inneren Teil des Messluftweges (Schläuche, Übergangsstücke und Absorptionskammer) eine den Messprozess entscheidend störende Kondensation auftreten. Hierfür gibt es zwei Gründe:
- Der Air Sampler kann an einer Stelle des Flugzeuges untergebracht sein, die einen umströmungsbedingten Unterdruck hat. Allein schon die damit unmittelbar verbundene adiabatische Abkühlung erreicht bei höheren Feuchtegraden schnell den Taupunkt.
- Die thermische Trägheit der Innenwände der Eingangsluftführung und der Absorptionskammer sorgt bei Sinkflug, also dem Übergang von kälteren zu wärmeren Bedingungen, für die Unterschreitung des Taupunktes.

Die beiden letztgenannten Effekte sorgen oftmals für eine unerwünschte Kondensatbildung innerhalb der Messluftleitungen und vor allem innerhalb der Absorptionsmesskammer.

Es ist vorteilhaft, wenn das TAT-Gehäuse von RAIWaM beheizbar ist (ca. 300 W), um auf diese Weise die Gefahr der flugzeuggefährdenden Eisbildung an der Sonde zu unterbinden.

RAIWaM weist gemäß einer bevorzugten Ausführungsvariante ein TAT-Gehäuse auf, dessen Temperaturmesselement durch einen speziell angefertigten Einsatz, d.h. den erfindungsgemäßen Einsatz ersetzt wird. Die aerodynamischen und thermodynamischen Bedingungen sind bei Stickney et al. (1994) beschrieben. Die Erfindung betrifft daher auch den Einsatz für eine jeweilige Ein- und Auslaufvorrichtung. Der Einsatz weist eine Stauhülse als ersten Zuleitungsabschnitt auf, die zum Einsetzen in den Schaft der Ein- und Auslaufvorrichtung ausgebildet ist und die so bemessen ist, dass eine Eintrittsöffnung der Stauhülse sich nahe der Öffnung zwischen Kopfteil und Schaft der Ein- und Auslaufvorrichtung befindet. Die Stauhülse ist über eine Einlaufleitung als zweitem Zuleitungsabschnitt mit einem Zuleitungsanschluss für die Zuleitung verbunden.

Der Einsatz weist ein die Einlaufleitung umgebendes Auslaufmantelrohr auf, das mit einem Ableitungsanschluss für die Ableitung verbunden ist. Der Einsatz weist des Weiteren Mittel zum lösbaren Verbinden des Einsatzes mit dem Schaft der Ein- und Auslaufvorrichtung auf. Mittel zum lösbaren Verbinden des Einsatzes mit dem Schaft der Ein- und Auslaufvorrichtungen können beispielsweise, Klemmelemente oder Befestigungselemente, wie beispielsweise Klemmen, Schrauben oder dergleichen sein. Das Auslaufmantelrohr kann weiterhin Austrittsöffnungen oder -schlitze aufweisen, die am oder nahe dem Übergang zwischen erstem Zuleitungsabschnitt und zweitem Zuleitungsabschnitt angeordnet sind und die ausgebildet sind, ein Fluid, beispielsweise die Messluft aus dem Auslaufmantelrohr, abzuführen. Der erste Zuleitungsabschnitt hat einen größeren Querschnitt als die Summe der Querschnitte des zweiten Zuleitungsabschnitts und des den zweiten Zuleitungsabschnitt umgebenden Auslaufmantelrohrs. Im eingesetzten Zustand des Einsatzes in den Schaft der Ein- und Auslaufvorrichtung wird so ein Raum um das Auslaufmantelrohr erzeugt, der eine Abfuhr der Luft aus den Austrittsschlitzen begünstigt.

Die Erfindung betrifft ferner die Verwendung eines erfindungsgemäßen Einsatzes in einer flugzeugmontierbaren Ein- und Auslaufvorrichtung. Die flugzeugmontierbaren Ein- und Auslaufvorrichtung weist einen Lufteinlauf, ein Kopfteil, einen Schaft und einen Befestigungsabschnitt auf. Der Lufteinlauf ist mit der Einlaufleitung des Einsatzes verbunden, die den Zuleitungsanschluss für die jeweilige Zuleitung aufweist. Der Schaft erstreckt sich zwischen dem Befestigungsabschnitt und dem Kopfteil und umschließt die Einlaufleitung. Der Befestigungsabschnitt ist für die Befestigung der Ein- und Auslaufvorrichtung an einem Flugzeug ausgebildet. Bevorzugt hat der Lufteinlauf einen solchen Abstand von dem Befestigungsabschnitt, dass der Lufteinlauf sich außerhalb einer Reibungsschicht (Grenzschicht) um eine Oberfläche eines Flugzeuges befindet, wenn die Ein- und Auslaufvorrichtung an einem fliegenden Flugzeug montiert ist.

Die Erfindung soll nun in Bezug auf ein Ausführungsbeispiel anhand der Figuren näher erläutert werden. Von den Figuren ist
- Fig. 1:: eine schematische Ansicht einer Wasserdampfmesseinrichtung mit einer Ein- und Auslaufvorrichtung für Luft mit einem Einsatz zum Anschluss an eine Wasserdampfmesssystem
- Fig. 2:: eine perspektivische Außenansicht der Ein- und Auslaufvorrichtung
- Fig. 3a:: eine geschnittene Darstellung des Prinzipschemas der Ein- und Auslaufvorrichtung zur Erläuterung der Funktion des RAIWaM
- Fig. 3b: eine perspektivische Teilansicht eines Einsatzes und
- Fig. 4:: eine teilweise geschnittene, perspektivische Ansicht des Einsatzes in der Ein- und Auslaufvorrichtung als RAIWaM zum Anschluss der Ein- und Auslaufvorrichtung an ein im Flugzeuginneren angeordnetes Messsystem.

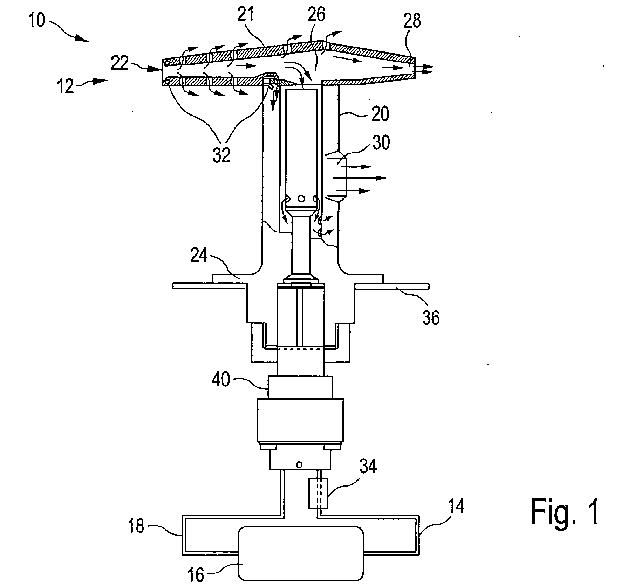

Fig. 1 zeigt eine Ansicht einer Wasserdampfmesseinrichtung 10 mit einer als Ram Air Intake for Water Vapour Measurement (RAIWaM) dienenden Ein- und Auslaufvorrichtung 12 mit einem als Ausleger dienenden Schaft 20. In die Ein- und Auslaufvorrichtung 12 ist ein Einsatz 40 eingesetzt, mittels dessen die Ein- und Auslaufvorrichtung 12 über eine Zuleitung 14 und eine Ableitung 18 mit einer Messkammer 16 eines Messsystems verbunden ist. Der Einsatz 40 ist entnehmbar.

Die Wasserdampfmesseinrichtung 10 weist somit eine Messsonde 12 als RAIWaM in Form eines TAT-Gehäuses (TAT = Total Air Temperature) auf. Außerdem weist die Wasserdampfmesseinrichtung 10 eine erste Luftführung als Zuleitung 14, eine Messkammer 16 mit dem eigentlichen Wasserdampfmesssystem und eine zweite Luftführung als Ableitung 18 auf, die im Betrieb nacheinander von Messluft durchströmt werden. Die Zuleitung 14 erstreckt sich von dem Einsatz 40 bzw. vom TAT-Gehäuse 12 (Messsonde 12) zu einem Messkammereingang der Messkammer 16. Die Ableitung 18 erstreckt sich von einem Messkammerausgang der Messkammer 16 zurück zum Einsatz 40 bzw. zum TAT-Gehäuse 12.

Das TAT-Gehäuse 12 weist einen Schaft 20 als Ausleger auf, an dessen einen Ende ein aerodynamisch geformtes Kopfteil 21 mit einem Lufteintritt oder Lufteinlauf 22 vorgesehen ist und dessen anderes Ende ein Befestigungsende in Form eines Flansches 24 zur Befestigung an einem Luftfahrzeug ist.

Der Schaft 20 ist so bemessen, dass sich der Lufteinlauf 22 als Lufteintritt im Bereich der ersten wenigen Meter hinter der Flugzeugnase im Flugbetrieb außerhalb einer fluiddynamischen Grenzschicht um das im Flugzustand befindliche Luftfahrzeug ist, an dem die Ein- und Auslaufvorrichtung 12 befestigt ist.

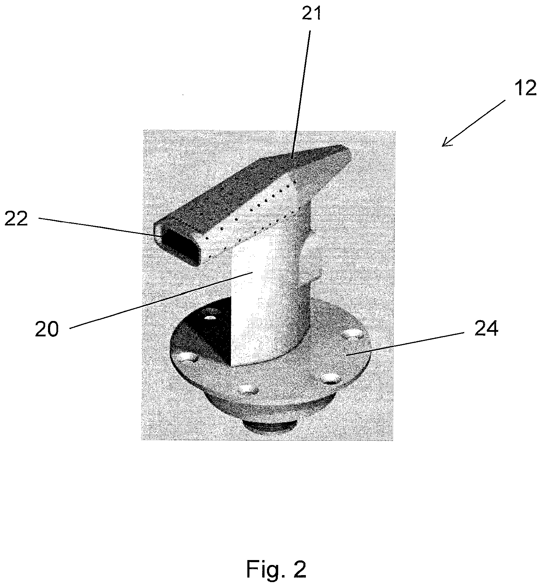

Fig. 2 zeigt eine perspektivische Außenansicht einer Ein- und Auslaufvorrichtung 12 mit Kopfteil 21, einem Schaft 20 und einem Befestigungsabschnitt in Form eines Flansches 24. Am Kopfteil 21 ist an einem Stirnende der Lufteinlauf 22 angeordnet, der zum Zuführen von Luft dient.

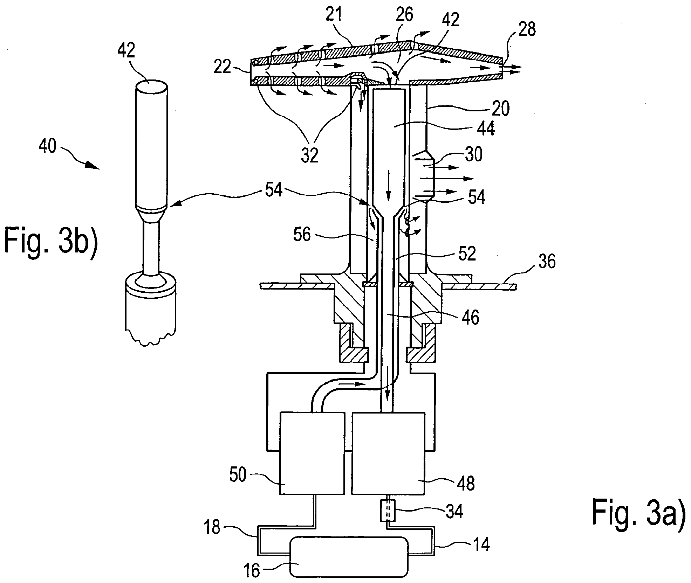

Fig. 3 illustriert den inneren Aufbau und die Funktion der gesamten Messeinrichtung inklusive RAIWaM. Der Kopfteil 21 schließt einen beidseitig offenen Strömungskanals 26 ein, dessen vorderes offenes Ende der Lufteinlauf 22 ist. Das hintere offene Ende des Strömungskanals 26 bildet einen Luftauslauf 28. Zwischen Lufteinlauf 22 und Luftauslauf 28 erweitert sich der Innenquerschnitt des Strömungskanals 26 zunächst und nimmt dann zum Luftauslauf 28 hin wieder ab. Der Luftauslauf 28 hat einen geringeren Querschnitt als der Lufteinlauf 22.

Die Zuleitung 14 geht dort von dem Strömungskanal 26 ab, wo dieser einen vergrößerten Innenquerschnitt aufweist. Hierfür ist die Zuleitung 14 über eine Einlaufleitung 46 und eine Eintrittsöffnung 42 einer Stauhülse 44 des Einsatzes 40 mit dem Strömungskanal 26 fluid-verbunden. Die Ableitung 18 ist mit einem Luftauslass 30 fluid-verbunden, der an einer Hinterkante des Schafts 20 angeordnet ist. Die Ableitung 18 ist dabei über ein Auslaufmantelrohr 52 und Austrittsöffnungen in Form von Austrittsschlitzen 54 mit dem Luftauslass fluid-verbunden.

Der Strömungskanal 26 ist bezüglich des Schaftes 20 bzw. bezüglich dessen Flansch 24 so ausgerichtet, dass er im Betrieb etwa parallel zur Anströmrichtung der Umgebungsluft verläuft. Im Betrieb auf den Lufteinlauf 22 auftreffende Umgebungsluft staut sich am Lufteinlauf 22 und erwärmt sich durch diesen Staueffekt adiabatisch. Entsprechend ist die Messluft gegenüber der Umgebungsluft erwärmt. Die erwärmte Messluft strömt aus dem Strömungskanal 26 über die Eintrittsöffnung 42 der Stauhülse 44 und die Einlaufleitung 46 in die Zuleitung 14 und durch diese hindurch in das Messsystem mit der Messkammer 16. Dort findet die Wasserdampfmessung mittels Absorptionsspektrometrie statt. Anschließend tritt die Messluft aus der Messkammer 16 und deren Messkammerausgang heraus in die zweite Luftführung bzw. die Ableitung 18 und wird von dieser wieder zurück zum Ableitungsanschluss 50 geführt.

Somit wird die Luft innerhalb des Kopfteils 21 in einem rechten Winkel zu der Stauhülse 44, der eigentlichen Einlassöffnung für die Temperaturmesssonde oder ggf. eine Weiterführung umgelenkt. Stromaufwärts vor diesem Umlenkpunkt ist der Kopfteil 21 mit Löchern versehen, die durch die Sogwirkung der äußeren Umströmung die Reibungsschicht der Innenströmung absaugen und damit verkleinern. Damit wird erreicht, dass der umgelenkte Strömungsteil stromaufwärts weitestgehend keinen Kontakt mit der Gehäusewand erhält. Somit kann bei der ursprünglichen Verwendung als Temperaturmessvorrichtung der ungestörte adiabatische Staueffekt an der Eintrittsöffnung 42 der Stauhülse 44 entstehen. Dessen Erwärmungseffekt auf den in der Hülse befindlichen Sensor wird in einem einfachen Rechenverfahren kompensiert. Der Staueffekt wird durch enge Austrittsöffnungen in Form von Austrittsschlitzen 54 am strömungsmäßigen Ende der Stauhülse 44 erreicht, wo an der Hülsenaußenseite aerodynamisch bedingt ein relativer Unterdruck herrscht. Die Luftgeschwindigkeit ganz außerhalb wird von bis zu 300 m/s auf wenige m/s reduziert. Damit wird der nahezu vollständige Gesamtdruck als die Summe aus dem statischen (Umgebungs-) Druck und dem Auftreffdruck erreicht.

Zur Vermeidung von Eisbildung an der als Messsonde dienenden Ein- und Auslaufvorrichtung 12 sind die der Strömung zugewandten Stirnflächen der Eintrittsöffnungen mit einer elektrischen Sondenheizung 32 vorgesehen. Für eine gegebenenfalls nötige weitere Erwärmung der Messluft ist die erste Zuleitung 14 mit einer Heizung 34 versehen.

Der Schaft 20 bewirkt einen Abstand des Lufteinlaufs 22 von einer von der Flugzeugaußenhaut 36 gebildeten Flugzeugoberfläche, der so bemessen ist, dass sich der Lufteinlauf 22 außerhalb einer fluiddynamischen Grenzschicht um die Flugzeugaußenhaut 36 befindet und somit frei mit einer Geschwindigkeit angeströmt wird, die der Geschwindigkeit des Flugzeugs relativ zur Luft (Airspeed) entspricht. Der Abstand beträgt vorzugsweise zwischen 50 mm und 150 mm, beispielsweise zwischen 80 mm und 100 mm. Besonders bevorzugt beträgt der Abstand 87 mm.

Anstelle einer sonst vorgesehenen Temperatursonde ist ein Einsatz 40 vorgesehen, der in das TAT-Gehäuse 12 eingesetzt ist und sowohl mit der Zuleitung 14 als auch mit der Ableitung 18 verbunden ist und einen Zuleitungsabschnitt und einen Ableitungsabschnitt bildet und somit der Zu- und Abfuhr von Messluft zu dem Messsystem mit der Messkammer 16 dient. Fig. 3 zeigt den Einsatz 40 sowohl in einer schematischen Darstellung in der Querschnittsansicht des RAIWaM (Fig. 3a) als auch in einer perspektivischen Teilansicht (Fig. 3b).

Der Einsatz 40 ist so gestaltet, dass eine Eintrittsöffnung 42 des Einsatzes 40 unmittelbar an den Strömungskanal 26 angrenzt. An der Eintrittsöffnung 42 des Einsatzes 40 liegt der nahezu volle Auftreffdruck an. Die Eintrittsöffnung 42 ist gleichzeitig der Eingang zur Zuleitung 14. Ein in der Figur oberer Teil des Einsatzes 40 bildet somit einen ersten Zuleitungsabschnitt 44 in Form einer Stauhülse, an den sich in gerader Linie ein zweiter Zuleitungsabschnitt 46 als Einlaufleitung des Einsatzes 40 anschließt, die gegenüber der als erstem Zuleitungsabschnitt dienenden Stauhülse 44 einen verringerten Durchmesser aufweist und zu einem Zuleitungsanschluss 48 führt, an dem die weitere Zuleitung 14 angeschlossen ist, die schließlich zur Messkammer 16 führt.

Der Einsatz 40 ist außerdem mit der Ableitung 18 verbunden und bildet einen Ableitungsabschnitt 52. Zum Anschluss an die übrige Ableitung 18 ist ein Ableitungsanschluss 50 vorgesehen, der zu dem Ableitungsabschnitt 52 führt, der als Mantelrohr koaxial um den zweiten Zuleitungsabschnitt 46 herum angeordnet ist, und der in eine Austrittsöffnung in Form eines Austrittsschlitzes 54 mündet, der sich dort befindet, wo der erste Zuleitungsabschnitt 44 mit größerem Durchmesser, also die Stauhülse, in den zweiten Zuleitungsabschnitt 46 (d.h. die Einlaufleitung) mit geringerem Durchmesser übergeht. Aus dem Austrittsschlitz 54 tritt abfließende Messluft in einen inneren Hohlraum 56 des Schafts 20 ein, der wiederum mit dem Luftauslass 30 am Schaft 20 fluidverbunden ist. Der innere Hohlraum 56 ist außerdem mit dem Strömungskanal 26 fluidverbunden und wird von in den Lufteinlauf 22 eintretender Luft durchströmt. Diese strömt unter anderem außen an dem ersten Zuleitungsabschnitt 44 mit vergrößertem Durchmesser vorbei und wird dort aufgrund einer Verengung infolge eines relativ geringen Abstandes zwischen einer Außenwand des ersten Zuleitungsabschnittes 44 und einer Innenwand des inneren Hohlraumes 56 beschleunigt, sodass sich ein gegenüber dem im Ableitungsabschnitt 52 herrschenden statischen Druck niedrigerer statischer Druck ergibt.

Der Einsatz 40 ist so gestaltet, dass dessen Eintritts- oder Stauhülse 44 zu der eines in TAT-Gehäusen verwendeten Temperaturmesseinsatzes geometrisch identisch ist. Die eingetretene Luft mündet in eine symmetrieachsenzentrale Einlaufleitung 46, die direkt zum Anschlussstück, d.h. dem Zuleitungsanschluss 48 der Messluftzuleitung bzw. Zuleitung 14 des eigentlichen Messsystems führt.

Die zurückfließende Messluft wird von dem Anschlussstück des Messsystemauslaufes, d.h. Ableitungsanschluss 50 über das Mantelrohr 52 um die Einlaufleitung 46 zu dem Austrittsschlitz 54 geführt, der an dem Einsatz 40 genau an der Stelle ist, an der sich an dem geometrisch und aerodynamisch identischen Temperaturmesseinsatz des TAT-Gehäuses die Austrittsöffnungen befinden. Die aus dem Austrittsschlitz 54 austretende Luft geht über den inneren Hohlraum 56 zur rückwärtigen Austrittsöffnung, die den Luftauslass 30 bildet. Das Druckgefälle zwischen der Eintrittsöffnung 42 am Stirnende der Stauhülse 44 und dem Austrittsschlitz 54 sorgt für den Fluss der Messluft. Letztendlich ergibt sich eine im Labor nachgeprüfte Fließgeschwindigkeit zwischen 3 und 5 Litern pro Minute. Das ist für übliche Messsysteme mehr als ausreichend. Ein gesonderter Pumpenbetrieb ist nicht erforderlich.

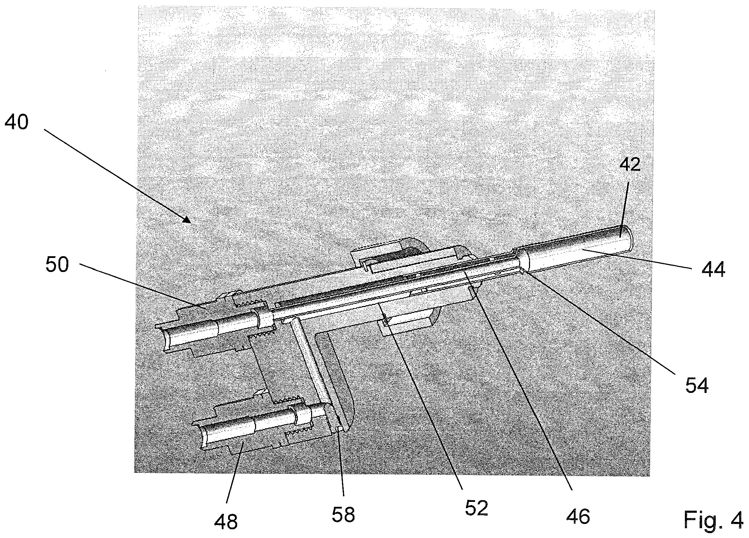

Die Menge Luft und damit auch der Druck im Luftführungssystem ab dem Eintritt sind über eine Stellschraube 58 einstellbar (siehe Schnittbild in Fig. 4). Die Stellschraube 58 bewirkt eine justierbare Engstelle. Diese Engstelle sorgt dafür, dass der Auftreffdruck im gesamten Messsystem gehalten wird. Die Durchströmungsmenge kann den Anforderungen des Messprozesses angepasst werden.

Fig. 4 zeigt eine teilweise geschnittene, perspektivische Ansicht des Einsatzes 40. Der gesamte Einsatz 40 ist in das TAT-Gehäuse 12 des RAIWaM einsetzbar und wieder entfernbar.

Der Einsatz 40 ist ausgebildet um in eine flugzeugmontierbare Ein- und Auslaufvorrichtung 12 eingesetzt zu werden.

Der Einsatz 40 umfasst eine Stauhülse 44, eine Einlaufleitung 46, einen Zuleitungsanschluss 48, einen Ableitungsanschluss 50 und ein Auslaufmantelrohr 52.

Die Stauhülse 44 hat eine Eintrittsöffnung 42 und bildet einen ersten Zuleitungsabschnitt, der dazu dient Luft in die Einlaufleitung 46 zu führen. Die Stauhülse 44 ist zum Einsetzen in einen jeweiligen Schaft 20 der jeweiligen Ein- und Auslaufvorrichtung 12 ausgebildet und so bemessen, dass in einem in den jeweiligen Schaft 20 eingesetzten Zustand des Einsatzes 40 die Eintrittsöffnung 42 der Stauhülse 44 sich nahe einer Öffnung zwischen einem jeweiligen Kopfteil 21 und dem jeweiligen Schaft 20 der jeweiligen Ein- und Auslaufvorrichtung 12 befindet (vgl. Fig. 3a). Die Einlaufleitung 46 bildet einen zweiten Zuleitungsabschnitt und erstreckt sich von einem distalen Ende der Stauhülse 44, d.h. vom Übergang des Einsatzes 40, an dem sich dessen Durchmesser ändert, bis zu dem Zuleitungsanschluss 48. Der Zuleitungsanschluss 48 ist dazu ausgebildet den Einsatz 40 und somit die Ein- und Auslaufvorrichtung 12 mit einer jeweiligen Zuleitung 14 zu verbinden. Die Zuleitung 14 führt die Luft insbesondere in eine Messkammer 16 eines Messsystems (s. Fig. 3a), in dem Eigenschaften der Luft gemessen werden. Die Messkammer 16 ist über eine Ableitung 18 mit dem Ableitungsanschluss 50 des Einsatzes 40 verbindbar (vgl. Fig. 3a). Der Ableitungsanschluss 50 ist also auch dazu ausgebildet den Einsatz 40 und somit die Ein- und Auslaufvorrichtung 12 mit einer jeweiligen Ableitung 18 zu verbinden. Die Ableitung 18 führt die Luft aus der Messkammer 16 zum Ableitungsanschluss 50. Der Ableitungsanschluss 50 ist mit dem Auslaufmantelrohr 52 verbunden, das als Ableitungsabschnitt dient und die Einlaufleitung 46 umschließt. Das Auslaufmantelrohr 52 endet an Austrittsöffnungen in Form von Austrittsschlitzen 54, die sich am Übergang zwischen Einlaufleitung 46 und Stauhülse 44 befinden, d.h. am Übergang der Durchmesseränderung. In dem in den jeweiligen Schaft 20 eingesetzten Zustand des Einsatzes 40 ist die Stauhülse 44 daher ausgebildet ein Druckgefälle zwischen der Eintrittsöffnung 42 der Stauhülse 44 und den Austrittsschlitzen 54 des Einsatzes 40 zu erzeugen, das für einen Fluss von Luft sorgt.

Im in den Schaft 20 der jeweiligen Ein- und Auslaufvorrichtung 12 eingesetzten Zustand des Einsatzes 40, wie in Fig. 3a gezeigt, dient der Einsatz also dazu die jeweilige Ein- und Auslaufvorrichtung 12, in die der Einsatz 40 eingesetzt ist, über eine jeweilige Zuleitung 14 und eine jeweilige Ableitung 18 mit einer jeweiligen Messkammer 16 eines jeweiligen Messsystems, das sich im Betrieb im Inneren eines jeweiligen Flugzeuges befindet, zu verbinden. Der Einsatz 40 ermöglicht es insbesondere ein Messsystem ohne zusätzliche Pumpe zu betreiben.

In dem in Fig. 4 gezeigten Ausführungsbeispiel des Einsatzes 40 weist der Einsatz 40 eine Stellschraube 58 am Übergang zwischen Einlaufleitung 46 und Zuleitungsanschluss 48 auf. Die Stellschraube 58 dient dazu eine Engstelle zu erzeugen. Die Engstelle kann durch Drehen der Stellschraube 58 erzeugt werden, wodurch das Volumen am Übergang zwischen Einlaufleitung 46 und Zuleitungsanschluss 48 verringert oder erhöht werden kann. Mit Hilfe der Stellschraube 58 kann so die Menge an Luft und daher der Druck im Messsystem eingestellt werden.

### Bezugszeichenliste

- 10: Wasserdampfmesseinrichtung
- 12: Ein- und Auslaufvorrichtung, Messsonde/TAT-Gehäuse,
- 14: Zuleitung
- 16: Messkammer
- 18: Ableitung
- 20: Schaft/Ausleger
- 21: Kopfteil
- 22: Lufteinlauf/Lufteintritt
- 24: Befestigungsende/ Befestigungsabschnitt /Flansch
- 26: Strömungskanal
- 28: Luftauslauf
- 30: Luftauslass
- 32: Sondenheizung
- 34: Heizung
- 36: Flugzeugaußenhaut
- 40: Einsatz
- 42: Eintrittsöffnung
- 44: Stauhülse, erster Zuleitungsabschnitt
- 46: Einlaufleitung, zweiter Zuleitungsabschnitt
- 48: Zuleitungsanschluss
- 50: Ableitungsanschluss
- 52: Ableitungsabschnitt/ Mantelrohr
- 54: Austrittsschlitz
- 56: Hohlraum
- 58: Stellschraube

## Patentansprüche

1. Einsatz (40) für eine flugzeugmontierbare Ein- und Auslaufvorrichtung (12), wobei der Einsatz (40)
- eine Stauhülse (44) mit einer Eintrittsöffnung (42),
- eine Einlaufleitung (46) mit einem Zuleitungsanschluss (48) für eine jeweilige Zuleitung (14) und
- wenigstens eine Austrittsöffnung (54) aufweist,
wobei die Stauhülse (44) einen ersten Zuleitungsabschnitt (44) bildet, zum Einsetzen in einen jeweiligen Schaft (20) der jeweiligen Ein- und Auslaufvorrichtung (12) ausgebildet ist und so bemessen ist, dass in einem in den jeweiligen Schaft (20) eingesetzten Zustand des Einsatzes (40) die Eintrittsöffnung (42) der Stauhülse (44) sich nahe einer Öffnung zwischen einem jeweiligen Kopfteil (21) und dem jeweiligen Schaft (20) der jeweiligen Ein- und Auslaufvorrichtung (12) befindet,
wobei die Stauhülse (44) über die Einlaufleitung (46) als zweitem Zuleitungsabschnitt (46) mit dem Zuleitungsanschluss (48) für eine jeweilige Zuleitung (14) verbunden ist und
wobei die Stauhülse (44) ausgebildet ist in dem in den jeweiligen Schaft (20) eingesetzten Zustand des Einsatzes (40) ein Druckgefälle zwischen der Eintrittsöffnung (42) der Stauhülse (44) und der wenigstens einen Austrittsöffnung (54) des Einsatzes (40) zu erzeugen, das für einen Fluss von Luft sorgt,
wobei die als zweiter Zuleitungsabschnitt (46) dienende Einlaufleitung (46) einen verringerten Durchmesser gegenüber der als erstem Zuleitungsabschnitt (44) dienenden Stauhülse (44) aufweist, wodurch in dem in den jeweiligen Schaft (20) eingesetzten Zustand des Einsatzes (40) das Druckgefälle zwischen der Eintrittsöffnung (42) der Stauhülse (44) und der wenigstens einen Austrittsöffnung (54) des Einsatzes (40) erzeugt wird,
**dadurch gekennzeichnet, dass**
der Einsatz (40) einen Ableitungsanschluss (50) für eine jeweilige Ableitung (18) aufweist und der Einsatz (40) ein die Einlaufleitung (46) umgebendes Auslaufmantelrohr (52) aufweist, das mit dem Ableitungsanschluss (50) für die jeweilige Ableitung (18) verbunden ist,
der erste Zuleitungsabschnitt (44) einen größeren Querschnitt aufweist als die Summe der Querschnitte des zweiten Zuleitungsabschnitts (46) und des den zweiten Zuleitungsabschnitt (46) umgebenden Auslaufmantelrohrs (52) und
das Auslaufmantelrohr (52) die wenigstens eine Austrittsöffnung (54) aufweist.

2. Einsatz (40) gemäß Anspruch 1, wobei der Einsatz (40) ausgebildet ist in dem in den jeweiligen Schaft (20) eingesetzten Zustand des Einsatzes (40) die jeweilige Ein- und Auslaufvorrichtung (12) über die jeweilige Zuleitung (14) und die jeweilige Ableitung (18) mit einer jeweiligen Messkammer (16) eines jeweiligen Messsystems, das sich im Betrieb im Inneren eines jeweiligen Flugzeuges befindet, zu verbinden.

3. Einsatz (40) gemäß Anspruch 2, wobei in dem in den jeweiligen Schaft (20) eingesetzten Zustand des Einsatzes (40) die wenigstens eine Austrittsöffnung (54) mit der jeweiligen Ableitung (18) verbindbar ist und zum Abführen eines Fluids aus dem Einsatz (40) ausgebildet ist.

4. Einsatz (40) gemäß Anspruch 2 oder 3, wobei der Einsatz (40) derart mit der jeweiligen Ableitung (18) verbindbar ist, dass der Einsatz (40) aus der jeweiligen Messkammer (16) austretende Luft zu einem jeweiligen Luftauslass (30) der jeweiligen flugzeugmontierbaren Ein- und Auslaufvorrichtung (12) führen kann.

5. Einsatz (40) gemäß einem der Ansprüche 1 bis 4, wobei die wenigstens eine Austrittsöffnung (54) am oder nahe dem Übergang zwischen dem ersten Zuleitungsabschnitt (44) und dem zweiten Zuleitungsabschnitt (46) angeordnet ist und ausgebildet ist ein Fluid aus dem Auslaufmantelrohr (52) abzuführen.

6. Einsatz (40) gemäß wenigstens einem der Ansprüche 1 bis 5, wobei der Einsatz (40) Mittel zum lösbaren Verbinden des Einsatzes (40) mit dem jeweiligen Schaft (20) der jeweiligen Ein- und Auslaufvorrichtung (12) aufweist.

7. Einsatz (40) gemäß wenigstens einem der Ansprüche 1 bis 6, wobei der Einsatz (40) eine Stellschraube (58) aufweist, die dazu ausgebildet ist eine justierbare Engstelle zu bewirken über die eine Menge Luft ab dem Eintritt und damit der Druck im Luftführungssystem einstellbar ist.

8. Verwendung eines Einsatzes (40) gemäß wenigstens einem der Ansprüche 1 bis 7 in einer flugzeugmontierbaren Ein- und Auslaufvorrichtung (12) mit
- einem Lufteinlauf (22)
- einem Kopfteil (21),
- einem Schaft (20) und
- einem Befestigungsabschnitt (24) für die Befestigung der Ein- und Auslaufvorrichtung (12) an einem Flugzeug,
wobei der Lufteinlauf (22) mit der Einlaufleitung (46) verbunden ist, die den Zuleitungsanschluss (48) für die jeweilige Zuleitung (14) aufweist,
wobei sich der Schaft (20) zwischen dem Befestigungsabschnitt (24) und dem Kopfteil (21) erstreckt und die Einlaufleitung (46) umschließt und
wobei der Lufteinlauf (22) einen solchen Abstand von dem Befestigungsabschnitt (24) hat, dass der Lufteinlauf (22) sich außerhalb einer Reibungsschicht (Grenzschicht) um eine Oberfläche eines Flugzeuges befindet, wenn die Ein- und Auslaufvorrichtung (12) an einem fliegenden Flugzeug montiert ist.

9. Flugzeugmontierbare Ein- und Auslaufvorrichtung (12) mit einem in die Ein- und Auslaufvorrichtung eingesetzten Einsatz (40) gemäß einem der Ansprüche 1 bis 7, wobei die flugzeugmontierbare Ein- und Auslaufvorrichtung (12) umfasst
- einen Lufteinlauf (22)
- einen Kopfteil (21),
- einen Schaft (20) und
- einen Befestigungsabschnitt (24) für die Befestigung der Ein- und Auslaufvorrichtung (12) an einem Flugzeug,
wobei der Lufteinlauf (22) mit der Einlaufleitung (46) des Einsatzes (40) verbunden ist, die den Zuleitungsanschluss (48) für die jeweilige Zuleitung (14) aufweist,
wobei sich der Schaft (20) zwischen dem Befestigungsabschnitt (24) und dem Kopfteil (21) erstreckt und die Einlaufleitung (46) des Einsatzes (40) umschließt und
wobei der Lufteinlauf (22) einen solchen Abstand von dem Befestigungsabschnitt (24) hat, dass der Lufteinlauf (22) sich außerhalb einer Reibungsschicht (Grenzschicht) um eine Oberfläche eines Flugzeuges befindet, wenn die Ein- und Auslaufvorrichtung (12) an einem fliegenden Flugzeug montiert ist.

10. Flugzeugmontierbare Ein- und Auslaufvorrichtung (12) gemäß Anspruch 9,
wobei das Kopfteil (21) an einer Stirnseite den Lufteinlauf (22) aufweist,
wobei das Kopfteil (21) einen beidseitig offenen Strömungskanal (26) einschließt, dessen vorderes, offenes Ende der Lufteinlauf (22) ist und der im Betrieb von Luft durchströmt wird und so angeordnet ist, dass er im Betrieb annähernd parallel zur anliegenden Strömung verläuft,
wobei das hintere offene Ende des Strömungskanals (26) einen kleineren Querschnitt hat, als der Lufteinlauf (22),
wobei die Ein- und Auslaufvorrichtung (12) eine Sondenheizung (32) aufweist und
wobei die Sondenheizung (32) an einer Stirnfläche der Ein- und Auslaufvorrichtung (12) und/oder zwischen Lufteinlauf (22) und Einlaufleitung (46) angeordnet ist.

11. Wasserdampfmesseinrichtung (10) mit einer flugzeugmontierbaren Ein- und Auslaufvorrichtung (12) gemäß Anspruch 9 oder 10, sowie einer Zuleitung (14), einem Messsystem mit einer Messkammer (16) und einer Ableitung (18), wobei die Zuleitung (14) mit dem Zuleitungsanschluss (48) des Einsatzes (40) und einem Eingang der Messkammer (16) dicht verbunden ist und die Ableitung (18) mit einem Ausgang der Messkammer (16) und dem Ableitungsanschluss (50) des Einsatzes (40) verbunden ist und wobei das Messsystem ausgebildet ist, den Wasserdampfgehalt von Luft in der Messkammer (16) zu bestimmen.

## Claims

1. An insert (40) for an inflow and outflow apparatus (12) that is mountable on an aircraft, wherein the insert (40) has
- an accumulator sleeve (44) having an entry opening (42);
- an inflow line (46) having a supply line connector (48) for a respective supply line (14); and
- at least one exit opening (54);
wherein the accumulator sleeve (44) forms a first supply line portion (44), is configured for insertion into a respective shaft (20) of the respective inflow and outflow apparatus (12), and is dimensioned such that the entry opening (42) of the accumulator sleeve (44) in a state in which the insert (40) is inserted into the respective shaft (20) is located close to an opening between a respective head part (21) and the respective shaft (20) of the respective inflow and outflow apparatus (12);
wherein the accumulator sleeve (44) by way of the inflow line (46) as the second supply line portion (46) is connected to the supply line connector (48) for a respective supply line (14); and
wherein the accumulator sleeve (44) is configured for generating in the state in which the insert (40) is inserted into the respective shaft (20) a pressure differential between the entry opening (42) of the accumulator sleeve (44) and the at least one exit opening (54) of the insert (40), said pressure differential providing an air flow,
wherein the inflow line (46) that serves as the second supply line portion (46) has a reduced diameter in relation to the accumulator sleeve (44) that serves as the first supply line portion (44), on account of which in the state in which the insert (40) is inserted into the respective shaft (20) the pressure differential between the entry opening (42) of the accumulator sleeve (44) and the at least one exit opening (54) of the insert (40) is generated,
**characterized in that**
the insert (40) has a discharge line connector (50) for a respective discharge line (18), and the insert (40) has an outflow jacket tube (52) that surrounds the inflow line (46) and is connected to the discharge line connector (50) for the respective discharge line (18),
the first supply line portion (44) has a cross section that is larger than the sum of the cross sections of the second supply line portion (46) and of the outflow jacket tube (52) that surrounds the second supply line portion (46), and
the outflow jacket tube (52) has the at least one exit opening (54).

2. The insert (40) as claimed in either of claim 1, wherein the insert (40) in the state in which the insert (40) is inserted into the respective shaft (20) is configured for connecting the respective inflow and outflow apparatus (12) by way of the respective supply line (14) and a respective discharge line (18) to a respective measuring chamber (16) of a respective measuring system which in operation is located in the interior of a respective aircraft.

3. The insert (40) as claimed in claim 2, wherein in the state in which the insert (40) is inserted into the respective shaft (20) the at least one exit opening (54) is connectable to the respective discharge line (18) and is configured for discharging a fluid from the insert (40).

4. The insert (40) as claimed in either of claims 2 or 3, wherein the insert (40) is connectable to the respective discharge line (18) in such a manner that the insert (40) can guide air that exits from the respective measuring chamber (16) to a respective air outlet (30) of the respective inflow and outflow apparatus (12) that is mountable on an aircraft.

5. The insert (40) as claimed in claims 1 to 4, wherein the at least one exit opening (54) is disposed on or close to the transition between the first supply line portion (44) and the second supply line portion (46), and is configured for discharging a fluid from the outflow jacket tube (52).

6. The insert (40) as claimed in at least one of claims 1 to 5, wherein the insert (40) has means for releasably connecting the insert (40) to the respective shaft (20) of the respective inflow and outflow apparatus (12).

7. The insert (40) as claimed in at least one of claims 1 to 6, wherein the insert (40) has a set screw (58) which is configured for causing an adjustable constriction by way of which a quantity of air from the point of entry and thus the pressure in the air guiding system are capable of being set.

8. A use of an insert (40) as claimed in at least one of claims 1 to 7 in an inflow and outflow apparatus (12) that is mountable on an aircraft, having
- an air inflow (22);
- a head part (21);
- a shaft (20); and
- a fastening portion (24) for fastening the inflow and outflow apparatus (12) to an aircraft;
wherein the air inflow (22) is connected to the inflow line (46) which has the supply line connector (48) for the respective supply line (14);
wherein the shaft (20) extends between the fastening portion (24) and the head part (21) and encloses the inflow line (46); and
wherein the air inflow (22) has such a spacing from the fastening portion (24) that the air inflow (22) is outside a friction layer (boundary layer) about a surface of an aircraft, when the inflow and outflow apparatus (12) is mounted on a aircraft in flight.

9. An inflow and outflow apparatus (12) that is mountable on an aircraft, having an insert (40) as claimed in one of claims 1 to 7 that is inserted into the inflow and outflow apparatus, wherein the inflow and outflow apparatus (12) that is mountable on an aircraft comprises
- an air inflow (22);
- a head part (21);
- a shaft (20); and
- a fastening portion (24) for fastening the inflow and outflow apparatus (12) to an aircraft;
wherein the air inflow (22) is connected to the inflow line (46) of the insert (40) which has the supply line connector (48) for the respective supply line (14);
wherein the shaft (20) extends between the fastening portion (24) and the head part (21) and encloses the inflow line (46) of the insert (40); and
wherein the air inflow (22) has such a spacing from the fastening portion (24) that the air inflow (22) is outside a friction layer (boundary layer) about a surface of an aircraft, when the inflow and outflow apparatus (12) is mounted on a aircraft in flight.

10. The inflow and outflow apparatus (12) that is mountable on an aircraft as claimed in claim 9,
wherein the head part (21) has the air inflow (22) on a front end;
wherein the head part (21) encloses a flow duct (26) that is open on both sides, the forward open end of which being the air inflow (22), and which flow duct (26) in operation is perfused by air and is disposed such that said flow duct (26) in operation runs almost parallel with the flow bearing thereon;
wherein the rearward open end of the flow duct (26) has a smaller cross section than the air inflow (22);
wherein the inflow and outflow apparatus (12) has a probe heater (32); and
wherein the probe heater (32) is disposed on an end face of the inflow and outflow apparatus (12) and/or between the air inflow (22) and the inflow line (46).

11. A water vapor measuring installation (10), having an inflow and outflow apparatus (12) that is mountable on an aircraft as claimed in either of claims 9 or 10 and a supply line (14), a measuring system having a measuring chamber (16) and a discharge line (18), wherein the supply line (14) is tightly connected to the supply line connector (48) of the insert (40) and to an entry of the measuring chamber (16), and the discharge line (18) is connected to an exit of the measuring chamber (16) and to the discharge line connector (50) of the insert (40), and wherein the measuring system is configured for determining the water vapor content of air in the measuring chamber (16).

## Revendications

1. Insert (40) pour un dispositif à écoulement d'entrée et de sortie pouvant être monté sur un avion, dans lequel l'insert (40) a
- un manchon (44) d'accumulation ayant une ouverture (42) d'entrée,
- un conduit (46) d'entrée ayant un raccord (48) d'alimentation pour une alimentation (14) respective et
- au moins une ouverture (54) de sortie,
dans lequel le manchon (44) d'accumulation forme une première partie (44) d'alimentation, est constitué pour être inséré dans un fût (20) respectif du dispositif (12) à écoulement d'entrée et de sortie respectif et a des dimensions telles que, dans un état de l'insert (40) inséré dans le fût (20) respectif, l'ouverture (42) d'entrée du manchon (44) d'accumulation se trouve près d'une ouverture entre une partie (21) respective de tête et le fût (20) respectif du dispositif (12) à écoulement d'entrée et de sortie respectif,
dans lequel le manchon (44) d'accumulation communique par le conduit (46) d'entrée en tant que deuxième partie (46) d'alimentation avec le raccord (48) d'alimentation pour une alimentation (14) respective et
dans lequel le manchon (44) d'accumulation est constitué pour, à l'état de l'insert (40) inséré dans le fût (20) respectif, produire une chute de pression entre l'ouverture (42) d'entrée du manchon (44) d'accumulation et la au moins une ouverture (54) de sortie de l'insert (40), qui donne un flux d'air,
dans lequel le conduit (46) d'entrée, servant de deuxième partie (46) d'alimentation, a un diamètre moindre que le manchon (44) d'accumulation servant de première partie (44) d'accumulation, grâce à quoi il est produit, dans l'état de l'insert (40) inséré dans le fût (40) respectif, la chute de pression entre l'ouverture (42) d'entrée du manchon (44) d'accumulation et la au moins une ouverture (54) de sortie de l'insert (40),
**caractérisé en ce que**
l'insert (40) a un raccord (50) de décharge pour une décharge (18) respective et l'insert (40) a un tube (52) formant enveloppe d'écoulement de sortie, qui entoure le conduit (46) d'entrée et qui communique avec le raccord (50) de décharge pour la décharge (18) respective,
la première partie (44) d'alimentation a une section transversale plus grande que la somme des sections transversales de la deuxième partie (36) d'alimentation et du tube (52) formant enveloppe d'écoulement de sortie, qui entoure la deuxième partie (46) d'alimentation, et
le tube (52) formant enveloppe d'écoulement de sortie a la au moins une ouverture (54) de sortie.

2. Insert (40) suivant la revendication 1, dans lequel l'insert (40) est constitué pour, dans l'état de l'insert (40) inséré dans le fût (20) respectif, mettre , par l'intermédiaire de l'alimentation (14) respective et de la décharge (18) respective, le dispositif (12) à écoulement d'entrée et de sortie respectif en communication avec une chambre (16) respective de mesure d'un système respectif de mesure, qui se trouve en fonctionnement à l'intérieur d'un avion respectif.

3. Insert (40) suivant la revendication 2, dans lequel, dans l'état de l'insert (40) inséré dans le fût (20) respectif, la au moins une ouverture (54) de sortie peut communiquer avec la décharge (18) respective et est constituée pour l'évacuation d'un fluide de l'insert (40).

4. Insert (40) suivant la revendication 2 ou 3, dans lequel l'insert (40) peut communiquer avec la décharge (18) respective, de manière à ce que l'insert puisse conduire de l'air sortant de la chambre (16) de mesure respective à une sortie (30) d'air respective du dispositif (12) à écoulement d'entrée et de sortie pouvant être monté sur un avion.

5. Insert (40) suivant l'une des revendications 1 à 4, dans lequel la au moins une ouverture (54) de sortie est disposée sur ou près de la transition entre la première partie (44) d'alimentation et la deuxième partie (46) d'alimentation et est constituée pour l'évacuation d'un fluide du tube (52) formant enveloppe à écoulement de sortie.

6. Insert (40) suivant au moins l'une des revendications 1 à 5, dans lequel l'insert (40) a des moyens de liaison amovible de l'insert (40) au fût (20) respectif du dispositif (12) à écoulement d'entrée et de sortie.

7. Insert (40) suivant au moins l'une des revendications 1 à 6, dans lequel l'insert (40) a une vis (58) de réglage, qui est constituée pour donner un étranglement réglable, par lequel une quantité d'air sortant de l'entrée et ainsi la pression dans le système de conduite d'air peut être réglée.

8. Utilisation d'un insert (40) suivant au moins l'une des revendications 1 à 7, dans un dispositif (12) à écoulement d'entrée et de sortie pouvant être monté sur un avion, comprenant
- une entrée (22) d'air,
- une partie (21) de tête,
- un fût (20) et
une partie (24) de fixation pour la fixation du dispositif (12) à écoulement d'entrée et de sortie à un avion,
dans laquelle l'entrée (22) d'air communique avec le conduit (46) d'entrée, qui a le raccord (48) d'alimentation pour l'alimentation (14) respective,
dans laquelle le fût (20) s'étend entre la partie (24) de fixation et la partie (21) de tête et entoure le conduit (46) d'entrée et
dans laquelle l'entrée (22) d'air est à une distance telle de la partie (24) de fixation que l'entrée (22) d'air se trouve à l'extérieur d'une couche de friction (couche limite) autour d'une surface d'un avion, lorsque le dispositif (12) à écoulement d'entrée et de sortie est monté sur un avion en vol.

9. Dispositif (12) à écoulement d'entrée et de sortie pouvant être monté sur un avion, comprenant un insert (40) inséré dans le dispositif (12) à écoulement d'entrée et de sortie suivant l'une des revendications 1 à 7, dans lequel le dispositif (12) à écoulement d'entrée et de sortie pouvant être monté sur un avion comprend
- une entrée (22) d'air,
- une partie (21) de tête,
- un fût (20) et
- une partie (24) de fixation pour la fixation du dispositif (12) à écoulement d'entrée et de sortie à un avion,
dans laquelle l'entrée (22) d'air communique avec le conduit (46) d'entrée de l'insert (40), qui a le raccord (48) d'alimentation pour l'alimentation (14) respective,
dans laquelle le fût (20) s'étend entre la partie (24) de fixation et la partie (21) de tête et entoure le conduit (46) d'entrée de l'insert (40) et
dans laquelle l'entrée (22) d'air est à une distance telle de la partie (24) de fixation que l'entrée (22) d'air se trouve à l'extérieur d'une couche de friction (couche limite) autour d'une surface d'un avion, lorsque le dispositif (12) à écoulement d'entrée et de sortie est monté sur un avion en vol.

10. Dispositif (12) à écoulement d'entrée et de sortie pouvant être monté sur un avion suivant la revendication 9,
dans lequel la partie (21) de tête a l'entrée (22) d'air d'un côté frontal,
dans lequel la partie (21) de tête entoure un canal (26) d'écoulement ouvert des deux côtés, dont l'extrémité avant ouverte est l'entrée (22) d'air et dans lequel de l'air passe en fonctionnement, et est disposé de manière à s'étendre en fonctionnement à peu près parallèlement à l'écoulement qui s'applique,
dans lequel l'extrémité arrière ouverte du canal (26) d'écoulement a une section transversale plus petite que l'entrée (22) d'air,
dans lequel le dispositif (12) à écoulement d'entrée et de sortie a un chauffage (32) particulier et
dans lequel le chauffage (32) particulier est monté sur une surface frontale du dispositif (12) à écoulement d'entrée et de sortie et/ou entre l'entrée (22) d'air et le conduit (46) d'entrée.

11. Dispositif (10) de mesure de la vapeur d'eau, comprenant un dispositif (12) à écoulement d'entrée et de sortie pouvant être monté sur un avion suivant la revendication 9 ou 10, ainsi qu'une alimentation (14), un système de mesure ayant une chambre (16) de mesure et une décharge (18), l'alimentation (14) communiquant d'une manière étanche avec le raccord (48) d'alimentation de l'insert (40) et avec une entrée de la chambre (16) de mesure et la décharge communicant avec une sortie de la chambre (16) de mesure et le raccord (50) de décharge de l'insert (40) et dans lequel le système de mesure est constitué pour déterminer la teneur en vapeur d'eau de l'air dans la chambre (16) de mesure.
